# FASCICULE DE BREVET EUROPEEN

(11) **EP 1 004 617 B1**
(45) Date de publication et mention de la délivrance du brevet: **30.01.2002**
(21) Numéro de dépôt: 99402910.6
(22) Date de dépôt: 23.11.1999
(51) Int. Cl.: C08J 9/10, C08J 9/00

(54) **Procédé de préparation d'un matériau cellulaire caoutchouteux**
Verfahren zur Herstellung eines zellularen gummiartigen Materials
Process for producing a rubbery cellular material

(30) Priorité: 24.11.1998 FR 9814797
(43) Date de publication de la demande: 31.05.2000
(73) Titulaire: Pennel Industries S.A., 59100 Roubaix (FR)
(72) Inventeur: Roussel, Marcel, 59100 Roubaix (FR)
(74) Mandataire: Le Coupanec, Pascale

(56) Documents cités:
- GB-A- 1 350 137
- US-A- 4 252 909
- US-A- 4 983 685

## Description

La présente invention concerne un procédé de préparation d'un matériau cellulaire caoutchouteux expansé.

Plus précisément la présente invention se rapporte à la manufacture de matériaux caoutchouteux se présentant sous la forme d'une bande ou nappe mince composée d'au moins une couche de caoutchouc ou de matériau apparenté, de préférence appliquée sur un support souple et constituée de manière générale par un tissu.

De tels articles sont notamment utilisés dans l'ameublement, notamment pour la confection d'envers de tapis, dans l'industrie de l'habillement et en particulier pour la réalisation de semelles de chaussures.

Les procédés classiquement retenus pour préparer ce type de matériau cellulaire caoutchouteux mettent en oeuvre une succession d'opérations impliquant notamment au moins une opération de calandrage et de réticulation.

Par définition, le calandrage désigne une technique de fabrication de feuilles, de plaques ou de films comprenant le laminage d'une matière thermoplastique entre plusieurs cylindres constituant la calandre. Généralement dans l'industrie du caoutchouc, cette opération de calandrage est associée à une enduction du matériau caoutchouteux à la surface d'un support poreux par exemple un tissu. Consécutivement à cette opération de calandrage, le matériau caoutchouteux est soumis à une opération de vulcanisation ou encore de réticulation au cours de laquelle s'effectue en fait la transformation chimique du mélange élastomérique de départ en un réseau réticulé.

Le brevet GB 1 350 137 décrit une méthode de fabrication de thibaude en caoutchouc cellulaire ayant une structure spongieuse mixte cellules ouvertes / cellules fermées. Cette méthode comprend:
- le mélange d'un matériau coutchouteux vulcanisable avec d'autres composants tels que un système de vulcanisation, un système d'expansion, des allongeurs de chaîne et/ou des charges;
- l'opération de calandrage du dit mélange pour former des feuilles;
- les opérations de réticulation et d'expansion de ces feuilles.

La présente invention s'intéresse plus particulièrement à la préparation d'articles caoutchouteux dits expansés.

Dans ce cas particulier, on incorpore dans le mélange de départ au moins un agent gonflant. En se décomposant sous l'action de la chaleur, cet agent génère des gaz, lesquels gaz développent des bulles dans le milieu élastomérique de faible viscosité. Il en résulte une structure cellulaire expansée.

D'une manière générale, les procédés de fabrication de matériaux caoutchouteux expansés classiques intègrent ces deux opérations de réticulation et d'expansion de manière concomitante mais non optimisée. Qui plus est, ces deux opérations de réticulation et d'expansion sont réalisées de manière discontinue par rapport à l'opération de calandrage. Classiquement, la bande ou nappe élastomérique est récupérée à l'issue de l'opération de calandrage pour être ensuite disposée dans une enceinte chauffée à la température adéquate pour l'exécution de l'opération de réticulation.

De manière inattendue, les inventeurs ont mis en évidence qu'il était possible d'optimiser les qualités mécaniques principalement en terme d'élasticité, des matériaux cellulaires caoutchouteux expansés en conduisant les étapes de réticulation et d'expansion simultanément, à bref délai et dans la continuité de l'opération de calandrage.

Plus précisément, la présente invention a pour premier objet un procédé de préparation d'un matériau cellulaire caoutchouteux expansé à partir d'un mélange caoutchouteux expansible selon lequel ledit mélange est soumis à au moins une opération de calandrage, de réticulation et d'expansion caractérisé en ce que l'opération de réticulation est réalisée simultanément à l'opération d'expansion, en continu et sur un plan horizontal et en ce que ledit mélange caoutchouteux expansible présente un indice Mooney compris entre 40 et 80 estimé à une température d'environ 50°C et comprend, outre au moins un matériau caoutchouteux, au moins un système de réticulation et un système d'expansion, lesdits systèmes étant actifs à une même température comprise entre 150° C et 210° C.

De manière surprenante, les inventeurs ont ainsi mis en évidence qu'il était possible, sous réserve de sélectionner un matériau caoutchouteux spécifique en terme d'indice Mooney et de lui associer deux systèmes respectivement de réticulation et d'expansion capables d'agir simultanément à une même température, de minimiser significativement la durée de fabrication d'un matériau caoutchouteux expansé et qui plus est d'améliorer ses qualités mécaniques.

C'est ainsi que la réalisation à bref délai, c'est-à-dire dans un temps pouvant ne pas excéder cinq minutes, des opérations de réticulation et d'expansion pour une température compatible avec la réaction simultanée de ces deux opérations, conduit à un matériau caoutchouteux expansé possédant une régularité de structure cellulaire et doté d'une élasticité significativement améliorée.

Enfin, dans le cas de la présente invention, ces deux étapes de réticulation et d'expansion sont réalisées en continu par déplacement horizontal du matériau venant d'être calandré, dans une enceinte, de préférence un tunnel porté à la température adéquate pour l'exécution concomitante de la réticulation et de l'expansion, et non au sein d'une étuve et sur un plan vertical conformément aux procédés conventionnels. Le fait de réaliser ces opérations de réticulation et d'expansion en continu de l'opération de calandrage, c'est-à-dire sans coupure de la chaîne de fabrication, est particulièrement intéressant sur le plan industriel.

Comme évoqué ci-dessus, le procédé de préparation revendiqué dans le cadre de la présente invention implique par ailleurs la mise en oeuvre d'un mélange caoutchouteux expansible possédant des caractéristiques spécifiques. L'une de ces caractéristiques porte notamment sur la viscosité de ce mélange. Ce mélange doit présenter un indice Mooney compris entre 40 et 80 estimé à une température d'environ 50°C.

Pour un indice Mooney inférieur, on observe une expansion trop importante qui induit une irrégularité cellulaire. Il en résulte une élasticité amoindrie.

A l'inverse, un indice Mooney plus élevé conduit à une expansion trop faible. L'épaisseur finale du matériau obtenu est dans ce cas nettement insuffisante.

Cet indice consistométrique Mooney correspond en fait à une valeur de couple de torsion. On mesure le couple à appliquer dans des conditions déterminées pour faire tourner un disque métallique dans une chambre cylindrique étanche remplie du matériau caoutchouteux. La résistance opposée par le caoutchouc à cette rotation, exprimée en unité arbitraire, est la consistance Mooney de l'éprouvette.

L'indice consistométrique Mooney est donc la valeur du couple de torsion exercée sur le rotor, exprimé en unité Mooney, indiqué par l'appareil après un temps de préchauffage de 1 minute suivi d'un temps de rotation du rotor généralement de 4 à 8 minutes. Dans le cas de la présente invention, cet indice est mesuré pour une température d'environ 50°C du rotor. Pour plus de précision, on se reportera à la notice publiée par la norme française NFT43005 en date de décembre 1991.

Les composants caoutchouteux ou encore élastomériques sont donc choisis de manière à conduire à un mélange caoutchouteux de départ possédant un indice consistométrique Mooney conforme à la présente invention.

Au sens de la présente invention, on entend désigner par "matériau caoutchouteux", un caoutchouc naturel, synthétique ou leurs mélanges.

Outre ses composants caoutchouteux, le mélange initial comprend au moins un système de réticulation et un système d'expansion qui sont tous deux actifs à une même température, comprise entre 150°C et 210°C.

En ce qui concerne plus particulièrement le système de réticulation, il comprend au moins un agent réticulant dit encore accélérateur primaire. Cet agent réticulant appartient de préférence à la famille des thiazoles, des quinones ou quinones-dioximes.

Il est de préférence présent à raison de 0,5 à 8 % en poids par rapport à la masse du matériau caoutchouteux à transformer.

A cet accélérateur primaire, il est préférentiellement associé un agent dit accélérateur secondaire.

Cet accélérateur secondaire appartient de préférence à la famille des dithiocarbamates métalliques ou non métalliques, des xanthates métalliques ou non métalliques ou encore à la famille des thiazoles.

Cet accélérateur secondaire est généralement présent à raison de 0,2 à 2 % en poids et plus préférentiellement de 0,2 à 1,5 % par rapport au poids du matériau caoutchouteux.

A titre illustratif des systèmes de réticulation susceptibles d'être mis en oeuvre dans le procédé revendiqué, on peut citer les couples accélérateurs primaire et secondaire suivants :
Accélérateurs primaires - Famille des thiazoles ; Accélérateurs secondaires - Famille des dithiocarbamates;
Accélérateurs primaires - Famille des thiazoles ; Accélérateurs secondaires - Famille des Xanthates ;
Accélérateurs primaires - Famille des quinones ou quinones-dioximes ; Accélérateurs secondaires - Famille des thiazoles.

Le système de réticulation peut être présent dans le mélange caoutchouteux à transformer à raison de 4 à 10 % en poids par rapport au poids du matériau caoutchouteux.

En ce qui concerne le système d'expansion, il comprend au moins un agent gonflant. Cet agent gonflant peut appartenir à la famille des azodicarbonamides ou encore à la famille des sulfohydrazides.

La température de décomposition des agents gonflants apparentés aux azodicarbonamides varie entre 160 et 210°C, quant aux agents gonflants appartenant à la famille des sulfohydrazides, leur température de décomposition est supérieure à 105°C.

Ces agents gonflants sont généralement associés au sein du système d'expansion à au moins un régulateur d'expansion.

A titre représentatif des régulateurs d'expansion convenant à la présente invention, on peut plus particulièrement nommer l'urée et ses dérivés, les composés à base de zinc de type oxyde de zinc, stéarate de zinc, ainsi que les composés aminés.

Généralement le système d'expansion est incorporé à raison de 2 à 10 % en poids du matériau caoutchouteux à traiter.

Les réactions de réticulation et d'expansion sont généralement réalisées à pression atmosphérique.

Outre ces composants essentiels, le mélange caoutchouteux à transformer peut également incorporer d'autres additifs conventionnels de type des agents anti-oxydation destinés à prévenir un vieillissement prématuré du mélange caoutchouteux. On peut également lui incorporer des charges en proportion plus ou moins importante. Il peut s'agir de charges renforçantes comme le kaolin ou le carbonate de magnésie ou encore le noir de carbone. Il peut également s'agir de carbonate ou silicate de calcium ou encore de silice ultra-fine. Les charges sont en fait des produits que l'on peut incorporer audit mélange sans trop abaisser ses qualités mécaniques. A titre illustratif d'autres charges, on peut citer la craie, le kaolin, le sulfate de baryte, le kieselguhr, le talc et le lithopone.

Il peut également être incorporé dans le mélange caoutchouteux un ou plusieurs agents plastifiants. Conviennent notamment comme agents plastifiants, les huiles dérivées du pétrole tels les composés naphténiques, aromatiques et/ou aliphatiques, les plastifiants de la famille des phtalates comme le dioctyphtalate (DOP) et les plastifiants ignifugeants de type phosphates et paraffines chlorées.

Outre ces additifs, le mélange caoutchouteux peut comprendre des pigments à des fins de coloration du matériau final, des odorants pour combattre d'odeur du caoutchouc vulcanisé, des abrasifs pour les articles qui doivent fournir un travail d'abrasion ou de polissage, des ignifugeants pour les articles que l'on désire protéger dans la mesure du possible contre l'incendie, des durcisseurs pour éviter les déformations au cours de certaines fabrications, des retardateurs pour le cas échéant modérer parfois l'action trop rapide des accélérateurs, ou des peptisants pour ramollir le caoutchouc.

La sélection de ces additifs ainsi que l'ajustement de leurs proportions respectives dans le mélange caoutchouteux à transformer relèvent bien entendu du savoir faire de l'homme de l'art et sont par ailleurs dictés par l'utilisation à laquelle est destinée le matériau caoutchouteux expansé final.

Selon un mode privilégié de l'invention, les opérations de réticulation et d'expansion sont réalisées en un temps n'excédant pas 5 minutes. Plus préférentiellement, elles sont effectuées dans un délai compris entre 1 à 3 minutes. Bien entendu, ce temps de séjour à la température de réticulation et expansion peut être prolongé ; toutefois dans la mesure où cette prolongation n'apporte aucun effet particulier supplémentaire, elle ne présente que peu d'intérêt sur le plan industriel.

Selon un mode de réalisation particulier de l'invention, l'opération de calandrage est également réalisée en continu c'est à dire de manière ininterrompue dans la chaîne de fabrication.

Dans une variante de l'invention, le mélange caoutchouteux expansible peut, consécutivement à l'opération de calandrage et préalablement à l'opération de réticulation et d'expansion, subir une opération de grainage.

Cette opération vise à appliquer sur l'une au moins des faces du matériau cellulaire caoutchouteux calandré des dénivellations formant des saillies et des creux dont toutes les surfaces présentent un certain grain et sont plus ou moins régulières et non lisses. L'aspect du produit en est considérablement amélioré ce qui est particulièrement avantageux lorsque ledit article est destiné à la décoration.

Dans ce cas particulier, après calandrage du matériau caoutchouteux, on imprime en relief, dans au moins l'une des faces de la couche obtenue au calandrage, un motif quelconque qui sera conservé au niveau de l'article fini.

Comme évoqué précédemment, il est par ailleurs possible de procéder lors de l'opération de calandrage à une enduction du mélange caoutchouteux sur la surface d'un support fibreux et de préférence une bande de tissu.

Le procédé revendiqué conduit avantageusement à des matériaux cellulaires caoutchouteux expansés possédant une structure cellulaire régulière ce qui donne un aspect de surface lisse. On note que les cellules sont majoritairement de forme elliptique avec le grand axe orienté verticalement. Cette forme elliptique ainsi que la régularité cellulaire confère au produit ainsi obtenu une reprise élastique particulièrement avantageuse.

Enfin le procédé en soi, compte tenu des adaptations décrites ci-dessus est particulièrement avantageux en terme industriel.

La présente invention a également pour objet un procédé tel que défini ci-dessus caractérisé en ce que le mélange caoutchouteux expansible est laminé sur une bande de tissu et en ce que ladite bande défile de manière continue et sur un plan horizontal à travers une enceinte portée à une température comprise entre 150 et 210°C, son temps de séjour dans ladite enceinte étant suffisant pour la réalisation simultanée des opérations de réticulation et expansion et en ce que ladite bande de tissu cellulaire caoutchouteux expansé ainsi obtenue est récupérée à la sortie de ladite enceinte.

Les variantes évoquées ci-dessus pour le procédé général sont également compatibles avec ce mode de réalisation particulier du procédé revendiqué.

L'exemple figurant ci-après est présenté à titre illustratif et non limitatif de la présente invention.

### EXEMPLE 1

La composition du mélange caoutchouteux à expanser et réticuler est la suivante :

| | |
|---|---|
| | en poids |
| * Caoutchouc naturel type SMR CV | 100 |
| * Peptisant (dibenzyl amidodiphényl disulfure) | 0,1 - 0,2 |
| * Factice | 5-15 |
| * Craie | 20 - 60 |
| * Kaolin | 10 - 30 |
| * Plastifiant naphténique | 30 - 50 |
| * Paraffine | 1 - 4 |
| * ZnO | 5 - 10 |
| * Acide stéarique | 1 - 3 |
| * Agents de protection | 1 - 3 |
| * Soufre | 1 - 2,5 |
| * Diéthyl dithiocarbamate de zinc | 0,3 -1,4 |
| * Disulfure de benzothiazyle | 1 - 2,5 |
| * Agent gonflant type Sulfohydrazide | 4-10 |
| * Urée | 4-10 |

On procède au mélange de ces ingrédients en mélangeur interne.

Le mélange caoutchouteux est ensuite laminé sur un support textile, suivi d'un traitement anticollant. Le mélange caoutchouteux laminé est ensuite mis en rouleau.

Les rouleaux de tissu enduits en provenance de la calandre sont ensuite disposés dans un dispositif de déroulement. Le tissu enduit est déroulé et passe dans un accumulateur ou il peut être stocké de manière temporaire. En aval de la calandre, sont disposés en série un dispositif à brosse de nettoyage et un dispositif à grameurs pour l'impression d'un motif en relief. A la suite de ceci, la bande obtenue est dirigée vers un tunnel d'expansion et de réticulation porté à une température de 180°C. La bande défile de manière continue à travers cette enceinte de manière à ce que son temps de séjour n'y excède pas 5 minutes. La sortie du tunnel est refroidie et le tissu enduit expansé est enroulé.

## Revendications

1. Procédé de préparation d'un matériau cellulaire expansé à base d'un caoutchouc naturel, synthétique ou d'un de leurs mélanges, possédant une structure cellulaire régulière et un aspect de surface lisse, à partir d'un mélange caoutchouteux expansible selon lequel ledit mélange est soumis à au moins une opération de calandrage, de réticulation et d'expansion **caractérisé en ce que** l'opération de réticulation est réalisée simultanément à l'opération d'expansion, en continu et sur un plan horizontal et **en ce que** ledit mélange caoutchouteux expansible présente un indice Mooney compris entre 40 et 80 estimé à une température d'environ 50°C et comprend, outre au moins un matériau caoutchouteux, au moins un système d'expansion à base d'au moins un agent gonflant appartenant à la famille des azodicarbonamides ou des sulfohydrazides et un système de réticulation, lesdits systèmes étant actifs à une même température comprise entre 150° C et 210° C.

2. Procédé selon la revendication 1, **caractérisé en ce que** les opérations de réticulation et d'expansion sont réalisées en un temps n'excédant pas 5 minutes.

3. Procédé selon l'une des revendications 1 à 2, **caractérisé en ce que** les opérations de réticulation et d'expansion sont réalisées en un temps compris entre 1 et 3 minutes.

4. Procédé selon l'une des revendications précédentes, **caractérisé en ce que** l'opération de calandrage est également réalisée en continu.

5. Procédé selon l'une des revendications 1 à 4, **caractérisé en ce que** le mélange caoutchouteux calandré subit préalablement à l'opération de réticulation et d'expansion une opération de grainage.

6. Procédé selon l'une des revendications 1 à 5, **caractérisé en ce que** le système d'expansion comprend en outre un régulateur d'expansion.

7. Procédé selon la revendication 6, **caractérisé en ce que** le régulateur d'expansion est choisi parmi l'urée et ses dérivés, les composés à base de zinc, ainsi que les composés aminés.

8. Procédé selon l'une des revendications précédentes, **caractérisé en ce que** le système d'expansion est incorporé à raison de 2 à 10 % en poids du mélange caoutchouteux à transformer.

9. Procédé selon l'une des revendications précédentes, **caractérisé en ce que** le système de réticulation comprend au moins un agent réticulant.

10. Procédé selon la revendication 9, **caractérisé en ce que** l'agent réticulant appartient à la famille des thiazoles, des quinones ou quinones-dioximes.

11. Procédé selon la revendication 9 ou 10, **caractérisé en ce que** le système de réticulation comprend, en outre, au moins un accélérateur secondairé.

12. Procédé selon la revendication 11 **caractérisé en ce que** l'accélérateur secondaire appartient à la famille des dithiocarbamates métalliques ou non métalliques, des xanthates métalliques ou non métalliques ou des thiazoles.

13. Procédé selon l'une des revendications précédentes, **caractérisé en ce que** le système de réticulation est présent à raison de 4 à 10% en poids par rapport au poids du mélange caoutchouteux expansible à traiter.

14. Procédé selon l'une des revendications précédentes, **caractérisé en ce que** le mélange caoutchouteux expansible à traiter comprend en outre un ou plusieurs agents plastifiants.

15. Procédé selon l'une des revendications précédentes, **caractérisé en ce que** les opérations de réticulation et d'expansion sont réalisées à la pression atmosphérique.

16. Procédé selon l'une des revendications précédentes, **caractérisé en ce que** le mélange caoutchouteux est enduit lors de l'opération de calandrage sur un support fibreux.

17. Procédé selon la revendication 16, **caractérisé en ce que** le support fibreux est une bande de tissu.

18. Procédé selon la revendication 16 ou 17, **caractérisé en ce que** le mélange caoutchouteux expansible est laminé sur une bande de tissu et **en ce que** ladite bande défile de manière continue et sur un plan horizontal à travers une enceinte portée à une température comprise entre 150 °C et 210°C son temps de séjour dans ladite enceinte étant suffisant pour la réalisation simultanée des opérations de réticulation et expansion et **en ce que** ladite bande de tissu cellulaire caoutchouteux expansée ainsi obtenue est récupérée à la sortie de ladite enceinte.

## Claims

1. Process for producing an expanded cellular material based on a natural or synthetic rubber or one of their mixtures, with a regular cellular structure and a smooth surface appearance, from an expansible rubbery mixture, according to which the said mixture is subjected to at least one rolling, reticulation and expansion operation, **characterised by** the fact that the reticulation operation is carried out simultaneously with the expansion operation, continuously and horizontally, and by the fact that the said Mooney index of the expansible rubbery mixture is between 40 and 80 inclusive estimated at a temperature of around 50°C and includes in addition at least a rubbery matenal, at least an expansion system with at least a swelling agent base belonging to the group of azodicarbonamides or sulphohydrazides, and a reticulation system, the said systems being active at the same temperature between 150°C and 210°C inclusive.

2. Process according to Claim 1. **characterised by** the fact that the reticulation and expansion operations are carried out in a time not exceeding 5 minutes.

3. Process according to one of the Claims 1 and 2, **characterised by** the fact that the reticulation and expansion operations are carried out in a time between 1 and 3 minutes inclusive.

4. Process according to one of the foregoing claims, **characterised by** the fact that the rolling operation is also carried out continuously.

5. Process according to one of the Claims 1 to 4, **characterised by** the fact that the rolled rubbery mixture, prior to the reticulation and expansion operation, undergoes a graining operation.

6. Process according to one of the Claims 1 to 5, **characterised by** the fact that the expansion system also has an expansion regulator.

7. Process according to Claim 6, **characterised by** the fact that the expansion regulator is chosen from among urea and its derivatives, zinc based compounds, as well as amino compounds.

8. Process according to one of the above claims, **characterised by** the fact that the expansion system is incorporated at the rate of 2 to 10% by weight of the rubbery mixture to be converted.

9. Process according to one of the above claims, **characterised by** the fact that the reticulation system includes at least one reticulating agent

10. Process according to Claim 9, **characterised by** the fact that the reticulating agent belongs to the group of thiazoles, quinones or quinone dioximes.

11. Process according to Claim 9 or 10, **characterised by** the fact that the reticulation system comprises, in addition, at least a secondary accelerator.

12. Process according to Claim 11, **characterised by** the fact that the secondary accelerator belongs to the group of metallic or non metallic dithio carbamates, metallic or non metallic xanthates or thiazoles.

13. Process according to one of the above claims, **characterised by** the fact that the reticulation system is present at the rate of 4 to 10% by weight compared with the weight of the expansible rubbery mixture to be treated.

14. Process according to one of the above claims, **characterised by** the fact that the expansible rubbery mixture to be treated also has one or more plasticizers.

15. Process according to one of the above claims, **characterised by** the fact that the reticulation and expansion operations are carried out at atmospheric pressure.

16. Process according to one of the above claims, **characterised by** the fact that the rubbery mixture is coated at the time of the rolling operation on a fibrous backing.

17. Process according to Claim 16, **characterised by** the fact that the fibrous backing is a band of fabric.

18. Process according to Claim 16 or 17, **characterised by** the fact that the eppmsible rubbery mixture is rolled on a band of fabric, and by the fact that the said band comes continuously and horizontally through an enclosure brought up to a temperature between 150°C and 210°C inclusive, the time which it stays in the said enclosure being sufficient for simultaneously carrying out the reticulation and expansion operations, and by the fact that the said band of expanded rubbery cellular fabric thus obtained is recovered at the outlet from the said enclosure.

## Patentansprüche

1. Verfahren zur Herstellung eines zellulären geschäumten Materials auf der Basis von natürlichem Kautschuk, synthetischem Kautschuk oder einem ihrer Gemische, das eine regelmäßige Zellstruktur und ein glattes Aussehen der Oberfläche hat, ausgehend von einem Gemisch aus verschäumbarem gummiartigem Material, umfassend das Unterwerfen des Gemisches mindestens einem Kalandrier-, Vernetzungs- und Verschäumungsarbeitsgang, **dadurch gekennzeichnet, dass** der Vernetzungsarbeitsgang gleichzeitig mit dem Verschäumungsarbeitsgang im Durchlaufverfahren und in einer horizontalen Ebene durchgeführt wird, und dadurch, dass das verschäumbare gummiartige Gemisch einen bei einer Temperatur von etwa 50°C bestimmten Mooney-Index von 40 bis 80 aufweist und außer mindestens einem gummiartigem Material mindestens ein Verschäumungssystem auf der Basis mindestens eines Treibmittels aus der Familie der Azodicarbonamide oder der Sulfohydrazide sowie ein Vernetzungssystem umfasst, wobei diese Systeme bei der gleichen Temperatur von 150°C bis 210°C wirksam sind.

2. Verfahren nach Anspruch 1, **dadurch gekennzeichnet, dass** die Vernetzungs- und Verschäumungsarbeitsgänge für eine Dauer durchgeführt werden, die 5 Minuten nicht übersteigt.

3. Verfahren nach einem der Ansprüche 1 bis 2, **dadurch gekennzeichnet, dass** die Vernetzungs- und Verschäumungsarbeitsgänge für eine Dauer von 1 bis 3 Minuten durchgeführt werden.

4. Verfahren nach einem der vorhergehenden Ansprüche, **dadurch gekennzeichnet, dass** der Kalandrierarbeitsgang ebenfalls im Durchlaufverfahren durchgeführt wird.

5. Verfahren nach einem der Ansprüche 1 bis 4, **dadurch gekennzeichnet, dass** das kalandrierte gummiartige Gemisch vor dem Vernetzungs- und Verschäumungsarbeitsgang einem Grainagearbeitsgang unterworfen wird.

6. Verfahren nach einem der Ansprüche 1 bis 5, **dadurch gekennzeichnet, dass** das Verschäumungssystem zudem einen Verschäumungsregulator umfasst.

7. Verfahren nach Anspruch 6, **dadurch gekennzeichnet, dass** der Verschäumungsregulator aus Harnstoff und seinen Derivaten, Verbindungen auf der Basis von Zink sowie aus Aminverbindungen ausgewählt ist.

8. Verfahren nach einem der vorhergehenden Ansprüche, **dadurch gekennzeichnet, dass** das Verschäumungssystem in einem Anteil von 2 bis 10 Gew.%, bezogen auf das umzuwandelnde gummiartige Gemisch, hinzugefügt wird.

9. Verfahren nach einem der vorhergehenden Ansprüche, **dadurch gekennzeichnet, dass** das Vernetzungssystem mindestens ein Vernetzungsmittel umfasst.

10. Verfahren nach Anspruch 9, **dadurch gekennzeichnet, dass** das Vernetzungsmittel aus der Familie der Thiazole, Chinone oder Chinone-Dioxime stammt.

11. Verfahren nach Anspruch 9 oder 10, **dadurch gekennzeichnet, dass** das Vernetzungssystem zudem mindestens einen sekundären Beschleuniger umfasst.

12. Verfahren nach Anspruch 11, **dadurch gekennzeichnet, dass** der sekundäre Beschleuniger aus der Familie der metallischen oder nicht metallischen Dithiocarbamate, der metallischen oder nicht metallischen Xanthate oder der Thiazole stammt.

13. Verfahren nach einem der vorhergehenden Ansprüche, **dadurch gekennzeichnet, dass** das Vernetzungssystem in einem Anteil von 4 bis 10 Gew.%, bezogen auf das Gewicht des zu behandelnden schäumbaren gummiartigen Gemischs, vorliegt.

14. Verfahren nach einem der vorhergehenden Ansprüche, **dadurch gekennzeichnet, dass** das zu behandelnde schäumbare gummiartige Gemisch zudem einen oder mehrere Weichmacher umfasst.

15. Verfahren nach einem der vorhergehenden Ansprüche, **dadurch gekennzeichnet, dass** die Vernetzungs- und Verschäumungsarbeitsgänge bei Atmosphärendruck durchgeführt werden.

16. Verfahren nach einem der vorhergehenden Ansprüche, **dadurch gekennzeichnet, dass** das gummiartige Gemisch beim Kalandrierarbeitsgang auf einen faserartigen Träger gegossen wird.

17. Verfahren nach Anspruch 16, **dadurch gekennzeichnet, dass** der faserartige Träger ein Gewebeband ist.

18. Verfahren nach Anspruch 16 oder 17, **dadurch gekennzeichnet, dass** das schäumbare gummiartige Gemisch auf ein Gewebeband geschichtet wird und das Band auf kontinuierliche Weise und auf einer horizontalen Ebene einen Behälter durchquert, der bei einer Temperatur von 150°C bis 210°C gehalten wird, wobei seine Aufenthaltsdauer in dem Behälter ausreicht, dass die Vernetzungs- und Verschäumungsarbeitsgänge gleichzeitig durchgeführt werden können, und das so erhaltene Gewebeband mit dem geschäumten, zellulären gummiartigen Material am Ausgang des Behälters erhalten wird.
